# EUROPEAN PATENT SPECIFICATION

(11) **EP 2 667 354 B1**
(45) Date of publication and mention of the grant of the patent: **08.07.2015**
(21) Application number: 13167473.1
(22) Date of filing: 13.05.2013
(51) Int. Cl.: G06T 7/00

(54) **Method and apparatus for analyzing stereoscopic or multi-view images**
Verfahren und Vorrichtung zur Analyse von Stereoskopie- oder Mehrfachansichtsbildern
Procédé et appareil pour analyser des images stéréoscopiques ou à vues multiples

(30) Priority: 24.05.2012 EP 12305572
(43) Date of publication of application: 27.11.2013
(73) Proprietor: Thomson Licensing, 92130 Issy-les-Moulineaux (FR)
(72) Inventor: Jachalsky, Jörn, 30974 Wennigsen (DE); Schewzow, Andrej, 30163 Hannover (DE)
(74) Representative: Schmidt-Uhlig, Thomas

(56) References cited:
- WO-A2-2012/035533
- FR-A1- 2 943 879
- US-A1- 2006 056 731
- US-A1- 2009 220 142
- US-A1- 2009 220 152
- DONG KWON PARK ET AL: "EFFICIENT USE OF LOCAL EDGE HISTOGRAM DESCRIPTOR", PROCEEDINGS ACM MULTIMEDIA 2000 WORKSHOPS. MARINA DEL REY, CA, NOV. 4, 2000; [ACM INTERNATIONAL MULTIMEDIA CONFERENCE], NEW YORK, NY : ACM, US, vol. CONF. 8, 4 November 2000 (2000-11-04) , pages 51-54, XP001003692, ISBN: 978-1-58113-311-0
- AMER A ET AL: "Reliable and fast structure-oriented video noise estimation", INTERNATIONAL CONFERENCE ON IMAGE PROCESSING (ICIP), IEEE, vol. 1, 22 September 2002 (2002-09-22), pages 840-843, XP010607455, DOI: 10.1109/ICIP.2002.1038156 ISBN: 978-0-7803-7622-9

## Description

The present invention relates to a method and an apparatus for analyzing stereoscopic or multi-view images. More specifically, a method and an apparatus for a pixel- or region-based analysis of stereoscopic or multi-view images are described, which are robust against outliers in the images.

In recent years stereoscopic 3D content for both theatrical and home entertainment has become increasingly popular. To create a sustainable and long-lasting trend, it is vital to ensure a quality and comfortable 3D experience for the end consumer in the cinema or at home. Thus, the content that is delivered to the end consumer has to meet certain minimum quality requirements with respect to the technical aspects of stereoscopic content production, such as feature films for theatrical release or broadcast.

For the technical quality analysis of the stereoscopic content, the analysis of the corresponding disparity maps plays an integral role. This allows for detection of hyperconvergence or hyperdivergence problems, edge conflicts, or alignment errors, e.g. vertical misalignments. To easily and accurately detect such problems, conflicts, or errors, it is necessary to utilize an automated analysis relying on robust and reliable algorithms and evaluation schemes.

The analysis of disparity maps for technical quality analysis is likewise applicable to multi-view content. Moreover, not only disparity maps associated to the stereoscopic or multi-view content may be analyzed. It is just as well possible to perform other types of image analysis that create pixel- or region-based incidents.

WO 2012/035533 A2 discloses a method for evaluating an effect of Chroma downsampling (CDS) in a compression process of an input image. CDS candidate groups are obtained from the input image, which is considered to constitute a segmentation into tiles. These groups are analyzed and an analysis result is obtained.

FR 2943879 A1 discloses a method for evaluating a visual quality of an image. The image is segmented into spatial zones, which are individually analyzed. An overall image quality result is derived from the individual analysis results.

D.K. Park et al.: "Efficient Use of Local Edge Histogram Descriptor", Proceedings of the 2000 ACM workshops on Multimedia (2000), pp. 51-54, discloses a method for image matching using an edge histogram descriptor. An image is segmented into image blocks, which are individually analyzed for different types of edges. Based on the analysis results also a global edge histogram is obtained.

US2009/0220142 A1 discloses a method for pattern detection, which is used for wafer inspection. A defect map is acquired, which is split into segments. Each segment is individually analyzed for linear patterns. From the analysis results of the different segments a detection result is derived for the complete wafer.

US2006/0056731 A1 discloses a method for determining sharpness predictors for a digital image. The image is split into blocks, whose DCT coefficients are individually analyzed. A sharpness predictor for the whole image is derived from the analysis results of the various blocks.

US2009/0220152 A1 discloses a method for quantifying blockiness in video files. Each frame of the video file is segmented into blocks and for each block intensity gradients are calculated. Based on these intensity gradients a blockiness index is calculated for each block. Finally, a blockiness value for each frame is derived from the blockiness indices of the blocks of the frames.

A. Amer et al.: "Reliable and Fast Structure-Oriented Video Noise Estimation", Proceedings of the 2002 International Conference on Image Processing (ICIP) (2002), pp. 840-843 discloses a method for structure-oriented video noise estimation. An image is segmented into blocks, and a noise variance is estimated from the variances of a set of blocks classified as the most homogeneous blocks of the image.

It is an object of the present invention to propose a solution for analyzing stereoscopic or multi-view images for a technical quality analysis.

According to the invention, this object is achieved by a method for analyzing stereoscopic or multi-view images, which comprises:
- retrieving a disparity map associated to the stereoscopic or multi-view images;
- segmenting the disparity map into a plurality of tiles;
- performing an analysis of disparity values of the tiles of the disparity map by comparing the disparity values of the tiles with a first threshold;
- for each tile of the disparity map determining whether the analysis of the disparity values failed and/or whether a number of disparity values below or above the first threshold exceeds a second threshold, wherein the analysis of the disparity values fails if the total number of disparity values or reliable disparity values within a tile is below a minimum number;
- comparing a number of tiles for which the analysis failed with a third threshold and/or comparing a number of tiles for which the number of disparity values below or above the first threshold exceeds the second threshold with a fourth threshold; and
- determining that the stereoscopic or multi-view images do not pass the analysis if the number of tiles for which the analysis failed exceeds the third threshold and/or if the number of tiles for which the number of disparity values below or above the first threshold exceeds the second threshold exceeds the fourth threshold.

Similarly, an apparatus for analyzing stereoscopic or multi-view images comprises:
- an input configured to retrieve a disparity map associated to the stereoscopic or multi-view images;
- a segmenter configured to segment the disparity map into a plurality of tiles;
- an analyzer configured to perform an analysis of disparity values of the tiles of the disparity map by comparing the disparity values of the tiles with a first threshold; and
- a comparator configured to determine for each tile of the disparity map whether the analysis of the disparity values failed and/or whether a number of disparity values below or above the first threshold exceeds a second threshold, wherein the analysis of the disparity values fails if the total number of disparity values or reliable disparity values within a tile is below a minimum number, to compare a number of tiles for which the analysis failed with a third threshold and/or comparing a number of tiles for which the number of disparity values below or above the first threshold exceeds the second threshold with a fourth threshold, and to determine that the stereoscopic or multi-view images do not pass the analysis if the number of tiles for which the analysis failed exceeds the third threshold and/or if the number of tiles for which the number of disparity values below or above the first threshold exceeds the second threshold exceeds the fourth threshold.

The general idea of the invention is to segment a dense disparity map into tiles, i.e. to create a tile grid. For each tile a separate analysis of the map values is performed, e.g. a histogram-based analysis. The results of each analysis are gathered, e.g. using counters, for an overall evaluation to generate the final analysis result for the complete map. The horizontal tile size, the vertical tile size, one or more thresholds for detecting or confirming incidents within the tiles, as well as further analysis parameters are determined based on the downscaling factor that was used to downscale the underlying stereoscopic images prior to the generation of the disparity map. This allows for achievement of a scale-invariant analysis.

It is determined whether the analysis of one or more tiles of the disparity map yielded an incident. The number of tiles for which the analysis yielded an incident is then compared with a threshold. If the number of tiles for which the analysis yielded an incident exceeds the threshold, it is determined that the stereoscopic or multi-view images do not pass the analysis.

The segmentation into tiles and the subsequent analysis on tile level makes the overall analysis robust against outliers and spatially disconnected threshold violations that are spread across the disparity map. Only violations, which are in a certain spatial proximity, are detected. This ensures, at least in a first approximation, that only contiguous violations covering a certain part or spot having a minimum size of the disparity map are marked as quality criterion violations.

Advantageously, it is determined whether the analysis of one or more tiles of the disparity map failed and the number of tiles for which the analysis failed is compared with a threshold. If the number of tiles for which the analysis failed exceeds the threshold, it is determined that the analysis of the disparity map failed. The evaluation of a tile may fail, for example, if the tile does not contain a sufficient number of values or reliable values. In this case it is better to disregard the analysis of this tile, which are likely not correct. If too many tiles cannot be evaluated, the analysis of the disparity map will generally not lead to useful results. It is then better not to generate any analysis result.

Preferably, analysis results of small tiles are weighted with a weighting factor. This allows to give smaller tiles a lower weight, which could otherwise negatively affect the analysis results.

Advantageously, the step of segmenting the disparity map into a plurality of tiles is repeated to generate a horizontally and/or vertically shifted grid of tiles. This ensures that also smaller contiguous violations that lie across tile borders are reliably detected.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.
- Fig. 1: shows the left image of a stereoscopic image pair;
- Fig. 2: shows the right image of the stereoscopic image pair;
- Fig. 3: depicts a disparity map associated to the stereoscopic image pair of Fig. 1;
- Fig. 4: depicts the disparity map of Fig. 3 split into a plurality of tiles;
- Fig. 5: schematically illustrates a method according to the invention for analyzing stereoscopic or multi-view images; and
- Fig. 6: schematically depicts an apparatus configured to perform the method according to the invention.

In the following the invention will be explained with regard to the analysis of a disparity map associated to a stereoscopic image pair. Of course, the invention is not limited to stereoscopic images. It is just as well applicable to multi-view images. Furthermore, the images themselves or other maps derived from the images or associated to the images apart from the disparity map can likewise be analyzed.

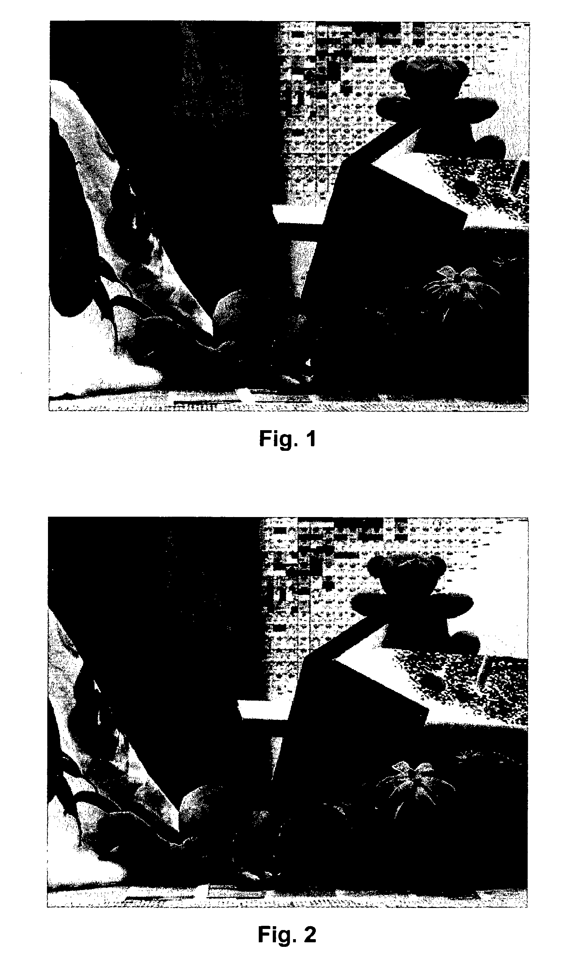

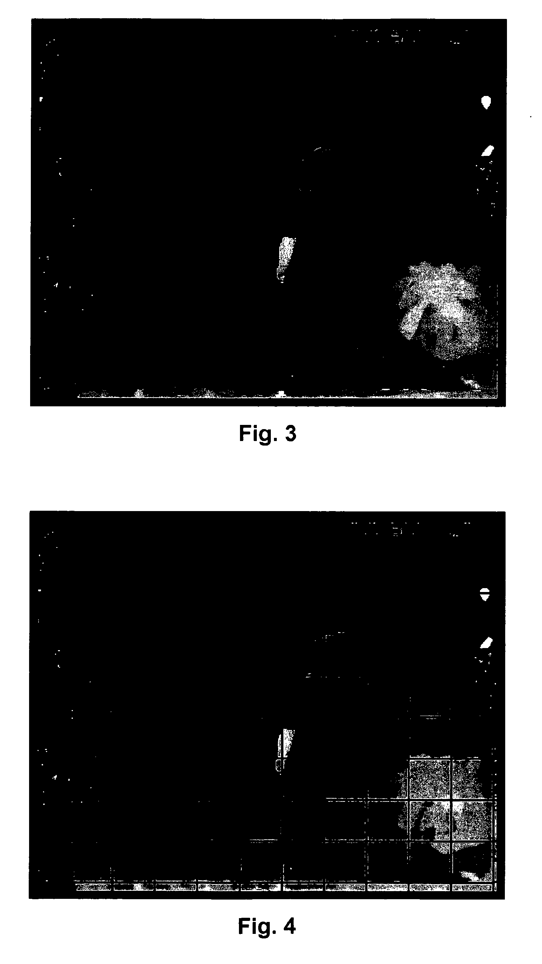

Fig. 1 shows the left image of a stereoscopic image pair, Fig. 2 depicts the corresponding right image. An associated disparity map is shown in Fig. 3. The disparity map of Fig. 3 split into a plurality of tiles is depicted in Fig. 4.

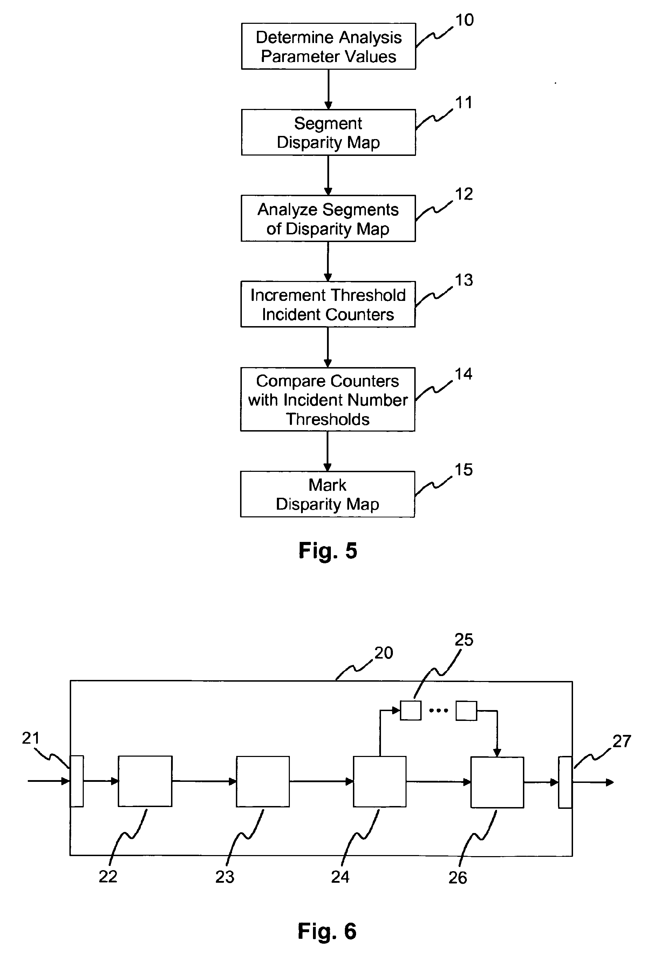

Fig. 5 schematically illustrates a method according to the invention for analyzing stereoscopic or multi-view images. In a first step 10, based on the downscaling factor that was used to downscale the stereoscopic input images prior to the disparity estimation, adequate values for the analysis parameters are determined. Two main parameters are the horizontal tile size *t_hor* and the vertical tile size *t_ver*. Other analysis parameters will be summarized further down below.

Subsequently the disparity map is evenly segmented 11 into tiles of the size defined by the horizontal tile size t hor and the vertical tile size t ver, which results in the creation of a tile grid. In general, the tiles have a uniform size, but there is one exception. If the width *m_width* of the disparity map is not a multiple of the horizontal tile size *t*_*hor* or if the height *m_height* of the disparity map is not a multiple of the vertical tile size *t*_*ver*, smaller tiles at the border of the disparity map are needed to achieve a full coverage of the entire disparity map. These smaller tiles are treated separately, as their analysis parameters are preferably adapted to their smaller size. Optionally, a lower weight is given to their results in the overall evaluation. The disparity map is segmented into a number *N_row* of rows and a number *N_col* of columns, where *N_row*=ceil*(m_height*/*t_ver)* and *N_col*=ceil*(m_width*/*t_hor).* Each row consists of *N*_*col* adjacent tiles and each column of *N*_*row* adjacent tiles.

Once the tile grid has been created 11, for each tile an analysis is performed 12. In accordance with a simple solutions, the number *N*_*i* of incidents is counted. Depending on the analysis criterion, an incident occurs if the disparity value is equal to or greater than a threshold *T_i* or equal to or smaller than the threshold T_*i*. One option is to take only the disparity values into account that have a confidence value, which is a well known reliability measure, that is equal to or greater than a threshold *T_CV*. Even multiple thresholds *T_i1, T i2,* ... can be used for the incidents. This allows for having severity levels for the incidents. For each threshold *T_iX* the number *N_i1, N_i2,* ... of incidents is counted 13 separately. If a comparison 14 yields that the number *N_i* or *N_iX* of incidents is equal to or greater than a corresponding threshold *T_Ni* or *T_NiX,* a threshold incident for this specific threshold is indicated 15. The threshold *T_Ni* or *T_NiX* guarantees that only a sufficient number of incidents triggers a threshold incident.

In accordance with a more advanced solution, a histogram-based analysis is performed. First a histogram is built from all disparity values that have a confidence value that is equal or greater than a threshold *T_CV.* Then outliers are removed. For this purpose the histogram is separated into regions. A new region starts whenever the number of disparity values for a histogram bin is equal to or less than a certain threshold *T_bin.* Those regions whose bins have only a total number of disparity values below a certain threshold *T_N,min* are discarded. For the remaining regions the number of incidents is counted as described above.

A successful analysis of a tile returns the above mentioned threshold incidents. An unsuccessful tile analysis returns the status 'failed'. An analysis can fail, for example, if the total number of disparity values or reliable disparity values within a tile is below a certain threshold *T_min.*

If there is a threshold incident, in the next step the tile is marked and the corresponding threshold incident counter is incremented 13, e.g. *C_NiX=C_NiX+1.* Advantageously, there also is a counter *C_fail* that is incremented if the analysis returns the status 'failed'.

If the counter *C_fail* is equal to or greater than a threshold *T_fail,* it is indicated that the analysis for this disparity map cannot return a valid result. Otherwise, it is indicated that the analysis result is valid.

Finally, the counters for the marked tiles *C_Ni* (or *C_NiX* with *X*=1,2,...) are compared 14 with the corresponding incident number thresholds *T_CNi* (or *T_CNiX* with *X*=1,2,...). If at least one of the counters is equal to or higher than the corresponding incident number threshold, the complete map and thus the corresponding stereoscopic image pair is marked 15 as not passing the specific analysis criterion.

Optionally, in order to give smaller tiles a lower weight, their threshold incidents are counted with separate counters, e.g. *C_NiX,small.* In the above comparing step 15 these separate counters are added to the standard counters *C_NiX* by calculating *C_NiX=C_NiX*+floor*(C_NiX,small*/*W_small),* where *W_small* is a weighting factor.

In order to also detect smaller contiguous violations that lie across tile borders, one strategy is to apply one or more iterations with a certain horizontal and vertical offset for the tile grid, e.g. half of the vertical and half of the horizontal tile size. The smaller tiles that are created at the border due to the offset are treated separately as described above.

The analysis parameters can be summarized as follows:
- *T_i* and *T_iX*:: Thresholds used to detect incidents
- *T_CV*:: Threshold for the confidence value
- *T_Ni* and *T_NiX:*: Thresholds used to indicate threshold incidents
- *T_bin*:: Threshold defining the start of a new histogram region
- *T_N,min*:: Threshold for the number of disparity values forming a contiguous histogram region to be taken into account for the analysis
- *T_min*:: Threshold for the minimum number of (reliable) disparity values required for a successful tile analysis
- *T_fail*:: Threshold for the acceptable number of failed tile analyses
- *T_CNi* and *T_CNi*:: Threshold for the acceptable number of threshold incidents
- *W_small*:: Weight for smaller tiles

The analysis parameters are adapted to the tile size.
Furthermore, either the thresholds used to detect incidents or the disparity values are scaled in accordance with the downscaling factor in order to generate scale-invariant results.

Fig. 6 schematically depicts an apparatus 20 configured to perform the method according to the invention. The apparatus 20 includes an input 21 for receiving a disparity map associated to a stereoscopic image pair. A parameter determination unit 22 determines adequate values for the analysis parameters for the disparity map. A segmenter 23 segments the disparity map into a plurality of tiles, which are then analyzed by an analyzer 24. A plurality of threshold incident counters 25 are provided for counting threshold incidents signaled by the analyzer 24. Of course, it is not necessary to implement the threshold incident counters 25 in hardware. They may likewise be realized as variables in software. A comparator 26 compares the incident counter values with corresponding incident number thresholds and marks the disparity map as not passing the specific analysis criterion if at least one of the counters is equal to or higher than the corresponding incident number threshold. The evaluation result determined by the comparator 26 is made available by the apparatus 20 for further handling via an output 27.

## Claims

1. A method for analyzing stereoscopic or multi-view images, the method **comprising:**
- retrieving a disparity map associated to the stereoscopic or multi-view images;
- segmenting (11) the disparity map into a plurality of tiles;
- performing an analysis (12) of disparity values of the tiles of the disparity map by comparing the disparity values of the tiles with a first threshold;
- for each tile of the disparity map determining (13) whether the analysis (12) of the disparity values failed and/or whether a number of disparity values either below or above the first threshold exceeds a second threshold, wherein the analysis (12) of the disparity values fails if the total -'number of disparity values or reliable disparity values within a tile is below a minimum number, the reliable disparity values being defined as having a confidence value equal or above a certain level;
- comparing (14) a number of tiles for which the analysis failed with a third threshold and/or comparing (14) a number of tiles for which the number of disparity values either below or above the first threshold exceeds the second threshold with a fourth threshold; and
- determining (15) that the stereoscopic or multi-view images do not pass the analysis if the number of tiles for which the analysis failed exceeds the third threshold and/or if the number of tiles for which the number of disparity values either below or above the first threshold exceeds the second threshold exceeds the fourth threshold.

2. The method according to claim 1, **wherein** the results of the analysis (12) of the tiles of the disparity map are gathered using counters.

3. The method according to claim 1 or 2, **wherein** analysis parameters are determined (11) based on a downscaling factor that was used to downscale the stereoscopic input or multi-view images prior to generating the disparity map.

4. The method according to claim 3, **wherein** the analysis parameters include at least one of a horizontal tile size, a vertical tile size, the first threshold, the second threshold, the third threshold, and the fourth threshold.

5. The method according to one of the preceding claims, **wherein** analysis results of small tiles are weighted with a weighting factor.

6. The method according to one of the preceding claims, **wherein** a histogram analysis is performed on the tiles.

7. The method according to one of the preceding claims, **wherein** segmenting (11) the disparity map into a plurality of tiles is repeated to generate a horizontally and/or vertically shifted grid of tiles.

8. An apparatus (20) configured to analyze stereoscopic or multi-view images, the apparatus **comprising:**
- an input (21) configured to retrieve a disparity map associated to the stereoscopic or multi-view images;
- a segmenter (23) configured to segment (11) the disparity map into a plurality of tiles;
- an analyzer (24) configured to perform an analysis (12) of disparity values of the tiles of the disparity map by comparing the disparity values of the tiles with a first threshold; and
- a comparator (26) configured to determine (13) for each tile of the disparity map whether the analysis (12) of the disparity values failed and/or whether a number of disparity values either below or above the first threshold exceeds a second threshold, wherein the analysis (12) of the disparity values fails if the total number of disparity values or reliable disparity values within a tile is below a minimum number, see claim 1, to compare (14) a number of tiles for which the analysis failed with a third threshold and/or comparing (14) a number of tiles for which the number of disparity values either below or above the first threshold exceeds the second threshold with a fourth threshold, and to determine (15) that the stereoscopic or multi-view images do not pass the analysis if the number of tiles for which the analysis failed exceeds the third threshold and/or if the number of tiles for which the number of disparity values either below or above the first threshold exceeds the second threshold exceeds the fourth threshold.

## Patentansprüche

1. Verfahren zum Analysieren von Stereoskopie- oder Mehrfachansichtsbildern, wobei das Verfahren **umfasst:**
- Abrufen einer Disparitätskarte, die den Stereoskopie- oder Mehrfachansichtsbildern zugeordnet ist;
- Segmentieren (11) der Disparitätskarte in mehrere Kacheln;
- Ausführen einer Analyse (12) von Disparitätswerten der Kacheln der Disparitätskarte durch Vergleichen der Disparitätswerte der Kacheln mit einem ersten Schwellenwert;
- Bestimmen (13), ob die Analyse (12) der Disparitätswerte fehlgeschlagen ist und/oder ob eine Anzahl der Disparitätswerte entweder unter oder über dem ersten Schwellenwert einen zweiten Schwellenwert übersteigt, für jede Kachel der Disparitätskarte, wobei die Analyse (12) der Disparitätswerte fehlschlägt, falls die Gesamtzahl der Disparitätswerte oder der zuverlässigen Disparitätswerte innerhalb einer Kachel unter einer Minimalzahl liegt, wobei die zuverlässigen Disparitätswerte als solche mit einem Vertrauenswert gleich oder über einem bestimmten Pegel definiert sind;
- Vergleichen (14) einer Anzahl der Kacheln, für die die Analyse fehlgeschlagen ist, mit einem dritten Schwellenwert und/oder Vergleichen (14) einer Anzahl der Kacheln, für die die Anzahl der Disparitätswerte entweder unter oder über dem ersten Schwellenwert den zweiten Schwellenwert übersteigt, mit einem vierten Schwellenwert; und
- Bestimmen (15), dass die Stereoskopie- oder Mehrfachansichtsbilder die Analyse nicht bestehen, falls die Anzahl der Kacheln, für die die Analyse fehlgeschlagen ist, den dritten Schwellenwert übersteigt und/oder falls die Anzahl der Kacheln, für die die Anzahl der Disparitätswerte entweder unter oder über dem ersten Schwellenwert den zweiten Schwellenwert übersteigt, den vierten Schwellenwert übersteigt.

2. Verfahren nach Anspruch 1, **wobei** die Ergebnisse der Analyse (12) der Kacheln der Disparitätskarte unter Verwendung von Zählern zusammengetragen werden.

3. Verfahren nach Anspruch 1 oder 2, **wobei** die Analyseparameter auf der Grundlage eines Abwärtsabtastungsfaktors bestimmt werden (11), der zum Abwärtsabtasten der Stereoskopieeingangs- oder Mehrfachansichtsbilder vor dem Erzeugen der Disparitätskarte verwendet wurde.

4. Verfahren nach Anspruch 3, **wobei** die Analyseparameter eine horizontale Kachelgröße und/oder eine vertikale Kachelgröße und/oder den ersten Schwellenwert und/oder den zweiten Schwellenwert und/oder den dritten Schwellenwert und/oder den vierten Schwellenwert enthalten.

5. Verfahren nach einem der vorhergehenden Ansprüche, **wobei** die Analyseergebnisse kleiner Kacheln mit einem Gewichtungsfaktor gewichtet werden.

6. Verfahren nach einem der vorhergehenden Ansprüche, **wobei** an den Kacheln eine Histogrammanalyse ausgeführt wird.

7. Verfahren nach einem der vorhergehenden Ansprüche, **wobei** das Segmentieren (11) der Disparitätskarte in mehrere Kacheln wiederholt wird, um ein horizontal und/oder vertikal verschobenes Gitter von Kacheln zu erzeugen.

8. Vorrichtung (20), die zum Analysieren von Stereoskopie- oder Mehrfachansichtsbildern konfiguriert ist, wobei die Vorrichtung **umfasst:**
- einen Eingang (21), der dafür konfiguriert ist, eine Disparitätskarte abzurufen, die den Stereoskopie- oder Mehrfachansichtsbildern zugeordnet ist;
- eine Segmentierungseinrichtung (23), die dafür konfiguriert ist, die Disparitätskarte in mehrere Kacheln zu segmentieren (11);
- einen Analysator (24), der dafür konfiguriert ist, durch Vergleichen der Disparitätswerte der Kacheln mit einem ersten Schwellenwert eine Analyse (12) von Disparitätswerten der Kacheln der Disparitätskarte auszuführen; und
- einen Komparator (26), der dafür konfiguriert ist, für jede Kachel der Disparitätskarte zu bestimmen (13), ob die Analyse (12) der Disparitätswerte fehlgeschlagen ist und/oder ob eine Anzahl der Disparitätswerte entweder unter oder über dem ersten Schwellenwert einen zweiten Schwellenwert übersteigt, wobei die Analyse (12) der Disparitätswerte fehlschlägt, falls die Gesamtzahl der Disparitätswerte oder der zuverlässigen Disparitätswerte innerhalb einer Kachel unter einer Minimalzahl liegt, wobei die zuverlässigen Disparitätswerte als solche mit einem Vertrauenswert gleich oder über einem bestimmten Pegel definiert sind, um eine Anzahl der Kacheln, für die die Analyse fehlgeschlagen ist, mit einem dritten Schwellenwert zu vergleichen (14) und/oder um eine Anzahl der Kacheln, für die die Anzahl der Disparitätswerte entweder unter oder über dem ersten Schwellenwert den zweiten Schwellenwert übersteigt, mit einem vierten Schwellenwert zu vergleichen (14) und zu bestimmen (15), dass die Stereoskopie- oder Mehrfachansichtsbilder die Analyse nicht bestehen, falls die Anzahl der Kacheln, für die die Analyse fehlgeschlagen ist, den dritten Schwellenwert übersteigt und/oder falls die Anzahl der Kacheln, für die die Anzahl der Disparitätswerte entweder unter oder über dem ersten Schwellenwert den zweiten Schwellenwert übersteigt, den vierten Schwellenwert übersteigt.

## Revendications

1. Un procédé permettant d'analyser des images stéréoscopiques ou à vues multiples, le procédé **comprenant :**
- la récupération d'une carte de disparité associée aux images stéréoscopiques ou à vues multiples ;
- la segmentation (11) de la carte de disparité dans une pluralité de mosaïques ;
- l'exécution d'une analyse (12) des valeurs de disparité des mosaïques de la carte de disparité en comparant les valeurs de disparité des mosaïques à un premier seuil ;
- pour chaque mosaïque de la carte de disparité, la détermination (13) indiquant si l'analyse (12) des valeurs de disparité a échoué et/ou si un nombre de valeurs de disparité inférieur ou supérieur au premier seuil dépasse un second seuil, où l'analyse (12) des valeurs de disparité échoue si le nombre total des valeurs de disparité ou des valeurs de disparité fiables dans une mosaïque est inférieur à un nombre minimum, les valeurs de disparité fiables étant définies comme ayant une valeur de confiance égale ou supérieure à un certain niveau ;
- la comparaison (14) à un troisième seuil, d'un nombre de mosaïques pour lequel l'analyse a échoué et/ou la comparaison (14) à un quatrième seuil, d'un nombre de mosaïques pour lequel le nombre de valeurs de disparité inférieur ou supérieur au premier seuil dépasse le second seuil ; et
- la détermination (15) que les images stéréoscopiques ou à vues multiples ne réussissent pas l'analyse si le nombre de mosaïques dépasse le troisième seuil et/ou si le nombre de mosaïques pour lequel le nombre de valeurs de disparité inférieur ou supérieur au premier seuil dépasse le second seuil, dépasse le quatrième seuil.

2. Le procédé selon la revendication 1, dans lequel les résultats de l'analyse (12) des mosaïques de la carte de disparité sont collectés à l'aide de compteurs.

3. Le procédé selon la revendication 1 ou 2, dans lequel les paramètres sont déterminés (11) d'après un facteur de réduction de la résolution qui était utilisé pour réduire la résolution de l'entrée stéréoscopique ou les images à vues multiples avant de générer la carte de disparité.

4. Le procédé selon la revendication 3, dans lequel les paramètres d'analyse incluent au moins une taille de mosaïque horizontale, une taille de mosaïque verticale, le premier seuil, le deuxième seuil, le troisième seuil et le quatrième seuil.

5. Le procédé selon l'une des revendications précédentes, dans lequel les résultats d'analyse de petites mosaïques sont pondérés à l'aide d'un facteur de pondération.

6. Le procédé selon l'une des revendications précédentes, dans lequel une analyse d'histogramme est effectuée sur les mosaïques.

7. Le procédé selon l'une des revendications précédentes, dans lequel la segmentation (11) de la carte de disparité en une pluralité de mosaïques est répétée pour générer une grille décalée horizontale et/ou verticale de mosaïques.

8. Un appareil (20) configuré pour analyser des images stéréoscopiques ou à vues multiples, l'appareil comprenant :
- une entrée (21) configurée pour récupérer une carte de disparité associée aux images stéréoscopiques à vues multiples ;
- -un segmenteur (23) configuré pour segmenter (11) la carte de disparité dans une pluralité de mosaïques ;
- -un analyseur (24) configuré pour effectuer une analyse (12) des valeurs de disparité des mosaïques de la carte de disparité en comparant les valeurs de disparité des mosaïques à un premier seuil ; et
- un comparateur (26) configuré pour déterminer (13) pour chaque mosaïque de la carte de disparité, si l'analyse (12) des valeurs de disparité a échoué et/ou si un nombre de valeurs de disparité inférieur ou supérieur au premier seuil dépasse un second seuil, dans lequel l'analyse (12) des valeurs de disparité échoue si le nombre total des valeurs de disparité ou des valeurs de disparité fiables dans une mosaïque est inférieur à un nombre minimum, les valeurs de disparité fiables étant définies comme ayant une valeur de confiance égale ou supérieure à un certain niveau pour comparer (14) à un troisième seuil un nombre de mosaïques pour lequel l'analyse a échoué et/ou en comparant (14) à un quatrième seuil, un nombre de mosaïques pour lequel le nombre de valeurs de disparité inférieur ou supérieur au premier seuil dépasse le second seuil, et pour déterminer (15) que les images stéréoscopiques ou à vues multiples ne réussissent pas l'analyse si le nombre de mosaïques pour lequel l'analyse a échoué dépasse le troisième seuil et/ou si le nombre de mosaïques pour lequel le nombre de valeurs de disparité inférieur ou supérieur au premier seuil dépasse le second seuil, dépasse le quatrième seuil.
